# EUROPEAN PATENT SPECIFICATION

(11) **EP 1 421 294 B1**
(45) Date of publication and mention of the grant of the patent: **13.12.2006**
(21) Application number: 02752856.1
(22) Date of filing: 21.08.2002
(51) Int. Cl.: F16F 7/08, B60M 1/23

(54) **MAGNETICALLY ACTUATED MOTION CONTROL DEVICE AND ITS USE IN TROLLEY WIRE SUSPENSION**
MAGNETISCH BETÄTIGTE BEWEGUNGSSTEUERVORRICHTUNG UND IHRE VERWENDUNG BEI DER FAHRDRAHTAUFHÄNGUNG
DISPOSITIF DE COMMANDE DE MOUVEMENT A ENTRAINEMENT MAGNETIQUE ET SON UTILISATION DANS LES SUSPENSIONS DE FILS CONDUCTEURS

(30) Priority: 27.08.2001 JP 2001256674
(43) Date of publication of application: 26.05.2004
(73) Proprietor: LORD CORPORATION, Cary, NC 27512-8012 (US)
(72) Inventor: CARLSON, J., David, Cary, NC 27511 (US); WILDER, Richard, Moncure, NC 27559 (US); KOESTER, Stephen, P., Cary, NC 27511 (US); MARJORAM, Robert, H., Holly Springs, NC 27540 (US)
(74) Representative: Dunlop, Brian Kenneth Charles
(86) International application number: PCT/US2002/026536
(87) International publication number: WO 2003/019037

(56) References cited:
- US-A- 6 053 291
- US-B1- 6 378 671
- PATENT ABSTRACTS OF JAPAN vol. 1999, no. 04, 30 April 1999 (1999-04-30) & JP 11 002277 A (HONDA MOTOR CO LTD;SHOWA:KK), 6 January 1999 (1999-01-06)
- PATENT ABSTRACTS OF JAPAN vol. 017, no. 374 (M-1445), 14 July 1993 (1993-07-14) & JP 05 060160 A (KAYABA IND CO LTD), 9 March 1993 (1993-03-09)
- PATENT ABSTRACTS OF JAPAN vol. 018, no. 503 (M-1677), 21 September 1994 (1994-09-21) & JP 06 171402 A (RAILWAY TECHNICAL RES INST;OTHERS: 02), 21 June 1994 (1994-06-21) cited in the application

## Description

### FIELD OF THE INVENTION

The invention relates to a magnetically actuated motion control device such as a magnetically actuated damper. By way of example, the motion control device of the present invention may be utilized as a suspension apparatus for hanging trolley wires that rub against the pantographs of electric cars under suspension wires or supplementary suspension wires. In use as a trolley wire suspension apparatus, the magnetically actuated device of the present invention provides a damper function that absorbs vibrations of the trolley wire when the pantograph passes the damper and allows contact between the trolley wire and pantograph to be maintained.

### BACKGROUND OF THE INVENTION

In the construction of suspension systems including load bearing catenary suspension wires and trolley wires for supporting and providing the transmission of electric current to electric motors, the trolley wire is in contact with the pantograph of the electric car and the trolley wire is hung by a plurality of suspension devices that extend between the load bearing catenary wire and trolley wires. Such suspension devices are provided at fixed, spaced intervals for example, every 4.5 m (15.0 ft). As a result of the presence of such suspension devices, the trolley and suspension wires are maintained in their desired positions and orientations.

In such prior art wire suspension systems, the trolley wires vibrate as the pantograph travels along the trolley wire and such trolley wire vibration causes undesirable separation of the trolley wire and the pantograph. It is well known in the prior art that suppressing the vibration of the trolley wire decreases wire separation between the trolley wire and the pantograph and contributes to an increase in the current collection capability of the electric car and useful life of the trolley wire. Additionally, it is also recognized in the prior art that such vibration suppression prevents wear on the wire due to repeated intermittent contact between the wire and pantograph. In particular, it is important to suppress trolley wire vibration when the electric car is operating at high speeds. Trolley wire suspension devices are known in the prior art. Such known devices produce damping forces based on wear resistance and spring forces and one example of such a prior art device is disclosed in Japanese Patent Disclosure Hei 6-171402. In the '402 Japanese reference, a piston and spring are located inside a cylinder hung on a supplementary suspension wire and the piston is biased to compression by the spring. A piston ring, having a vibration absorption function based on the coefficient of friction of the ring and of the cylinder, is also located in the cylinder. The ring rubs against the cylinder to provide damping forces. A piston rod is made integral with the piston at one rod end. The trolley wire which is located below and parallel to the supplementary suspension wire is joined to the lower end of a piston rod. The prior art device serves to maintain the trolley and supplementary suspension wires in their desired positions and orientations.

In the above said trolley wire suspension apparatus, as the piston ring provides damping forces through frictional contact with the cylinder, the ring wears and as a result its frictional braking strength decreases with wear, and ultimately becomes unable to provide sufficient damping forces to effectively support the trolley and suspension wires. In order to ensure that such devices are able to supply adequate damping forces, it is necessary to regularly inspect, recondition and repair prior art devices. Such inspection, reconditioning and repair processes are by necessity , comparatively strict and component parts are exchanged conservatively. Also, in order to obtain the required frictional resistance between the cylinder and the piston to produce the desired damping forces, the component parts must be manufactured with precision to achieve the required tolerances among the component parts. As a result of such required precision, manufacturing of such prior art suspension devices is costly and difficult.

Consequently, the present invention has an object of offering a motion control device which in one instance, may be used as a trolley wire suspension apparatus, where the present invention device does not require strict conservative inspection and parts exchange; where manufacture of the device is relatively uncomplicated due to simple device construction that does not require a degree of relative precision among the assembled component parts, and provides reliable damping

The foregoing illustrates limitations known to exist in present motion control devices. Thus it is apparent that it would be advantageous to provide an alternative directed to overcoming one or more of the limitations set forth above. Accordingly, a suitable alternative motion control device is provided including features more fully disclosed hereinafter. US6053291 describes a magnetic damper. EP 1269040, published after the priority date of this patent application, describes a further magnetic damper having a slotted outer casing.

### SUMMARY OF THE INVENTION

Generally, the present invention addresses the shortcomings of prior art motion control devices by providing a magnetically actuated motion control device, comprising at least one first movable member of magnetic material, a second member comprising a piston movable along an axis, and proximate said at least one first movable member, and disposed radially outwardly of the axis, said second movable member being movable relative to the or each first movable member; and a permanent magnet magnetic field generator which causes the at least one first movable member to be attracted radially inwardly and into contact with the second movable member when a magnetic field is supplied by said magnetic field generator to thereby produce a motion control force, characterised in that the said at least one movable member comprises a discrete elongate slat. By the motion control device of the present invention, the requisite damping forces are supplied in a reliable, effective manner. The invention extends to a wire suspension apparatus incorporating the motion control device.

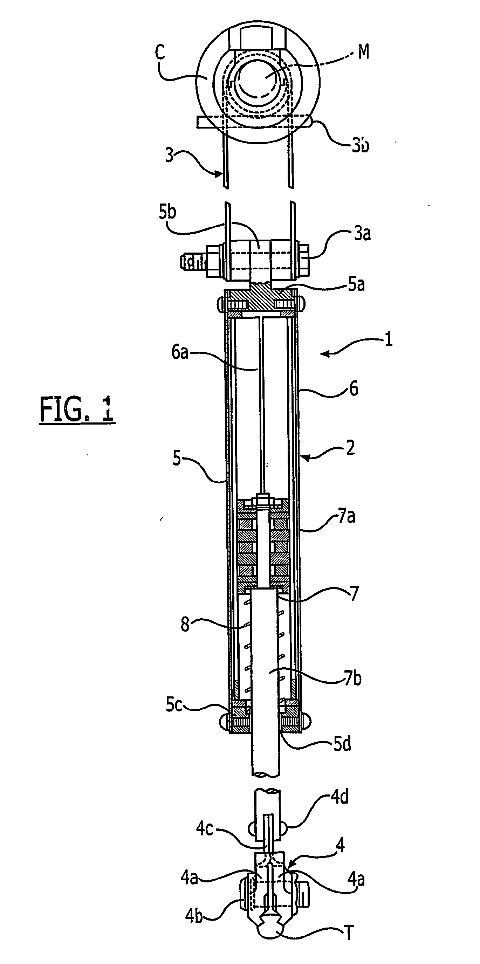

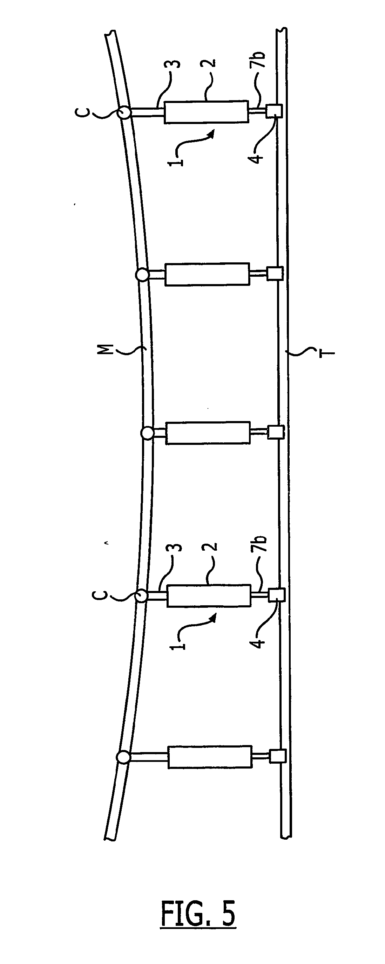

More specifically, turning to a first embodiment device of the present invention, as shown in Figure 1 and in the schematic representation of Figure 5 that comprises a conventional wire suspension system that includes the motion control device 1 of the present invention, in order to resolve the shortcomings associated with the prior art devices, the device of the present invention may comprise; (a) a nonmagnetic cylindrical casing 5 having an end connected either to trolley wire T or suspension wire M located above trolley wire T and having a housing opening 5d at the opposite housing end; (b) a cylindrical housing 6 comprising a magnetic material and located inside the casing 5 so that the vertical axis of the casing 5 and housing 6 are in vertical alignment, the housing 6 having at least one discrete movable member 6b or a slot 6a oriented along the vertical axis of the device to thereby define at least one first movable member 6b, the movable member 6b being adapted to contract in the radial direction; (c) a piston 7 movable linearly in the housing along the vertical axis is made integral with rod 7b at one rod end, and the rod extends through opening 5d of casing 5, outward with the opposite rod end connected either to suspension wire M or trolley wire T. The piston 7 is positioned inside housing 6 with one piston end located at one end of housing 6 and the other piston end in abutment with compression spring 8. Piston 7 includes magnetic pole pieces 7a that are excited by magnetic field generating permanent magnets 7c and by the combination of the magnets, pole pieces and first movable members a magnetic field is formed to draw the at least one member 6 toward piston 7 to grip the piston and thereby supply the required damping forces.

In the suspension apparatus of this invention, spring 8 constantly pulls up trolley wire T with a prescribed force by means of rod 7b. When trolley wire T is displaced by the passage of the pantograph, piston 7 is displaced upward toward casing end cap 5a by rod 7b. When the pantograph passes, the displacement of the piston is stopped, and the spring 8 causes the piston 7 to return to its original position in housing 6. As the piston, magnets and pole pieces are displaced axially, first movable members 6 are forced radially by the application of the magnetic attractive force supplied by permanent magnet disks 7c of piston 7, and the members' inner peripheral surfaces contact piston member 7. Consequently, while piston 7 rises and falls, a prescribed contact occurs between the piston and members 6, and this contact produces a damping force that serves to limit trolley wire undulations and maintain the wire and pantograph in contact.

The foregoing and other aspects will become apparent from the following detailed description of the invention when considered in conjunction with the accompanying drawing figures.

### BRIEF DESCRIPTION OF THE DRAWINGS

Figure 1 is a longitudinal sectional view of a first embodiment motion control device of the present invention.

Figure 2 is a side view of the trolley wire suspension apparatus of Figure 1.

Figure 3 is a sectional view of a first operating state of the device of Figure 1.

Figure 4 is a sectional view of a second operating state of the device of Figure 1.

Figure 5 is a schematic view illustrating the trolley and suspension wires supported therebetween by the device of the present invention.

Figure 6 is an isometric view of an alternate embodiment damper of the present invention.

Figure 7 is a longitudinal sectional view of the alternate embodiment damper of the present invention shown in Figure 6.

Figure 8 is an isometric view of a single first movable member of the alternate embodiment damper of Figure 6.

Figure 9 is a longitudinal sectional view taken along line 9-9 of Figure 8.

Figure 10 is an isometric view of an alternate embodiment of the first movable member.

Figure 11 is an isometric view of another alternate embodiment of the first movable member.

Figure 12 is partial view of the device of the present invention and comprises an enlarged view of the portion of the device of the present invention enclosed by the circle identified as 13 in Figure 7.

Figure 13 is an isometric view of the first embodiment movable member shown in Figure 8 where the first embodiment movable member includes means for providing a variable magnitude magnetic attractive force.

Figure 14 is an isometric view of the first embodiment movable member shown in Figure 8 where the first embodiment movable member includes an alternate means for providing a variable magnitude magnetic attractive force.

Figure 15 is lateral sectional view illustrating an alternate embodiment housing of the alternate motion control device of the present invention.

Figure 16 is a partial sectional view illustrating an alternate means for securing the ends of the first movable members of the device of Figure 7.

Figure 17 is a partial sectional view illustrating a further alternate means for securing the ends of the first movable members of the device of Figure 7.

### DETAILED DESCRIPTION OF THE PREFERRED EMBODIMENTS

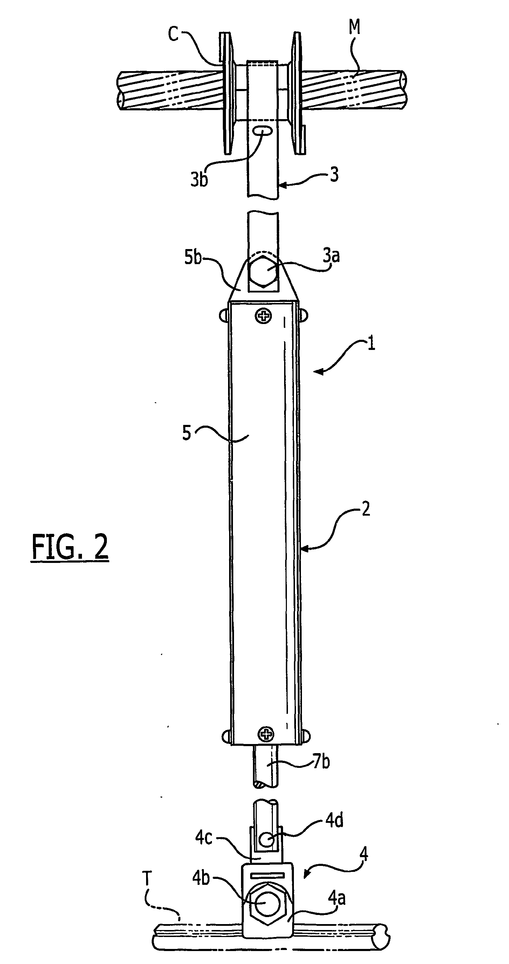

A first embodiment motion control device of the present invention will be explained with reference to drawing Figures 1-5. Figure 1 is a sectional view of the first embodiment motion control device of the present invention, Figure 2 is a side view of the first embodiment motion control device of Figure 1, Figures 3 and 4 are respectively sectional views of different operating states of the first embodiment motion control device of the present invention, and Figure 5 is a schematic view illustrating the trolley and suspension wires supported therebetween by the motion control device of the present invention.

Figure 5 illustrates the suspension stringing construction of an electric car wire relative to the present device. In Figure 5, T is a trolley wire that rubs against the pantograph (not illustrated) of an electric car, M is a suspension wire hung above trolley wire T, C is a protective cover attached to the suspension wire, and 1 is a suspension apparatus furnished between suspension wire M and trolley wire T at fixed intervals. Suspension apparatus 1 supports trolley wire T beneath suspension wire M.

As shown in Figure 1 and Figure 2 suspension apparatus 1 comprises damper 2, hanger 3 that connects damper 2 to suspension wire M, and ear 4 that is a serves to join damper 2 to trolley wire T.

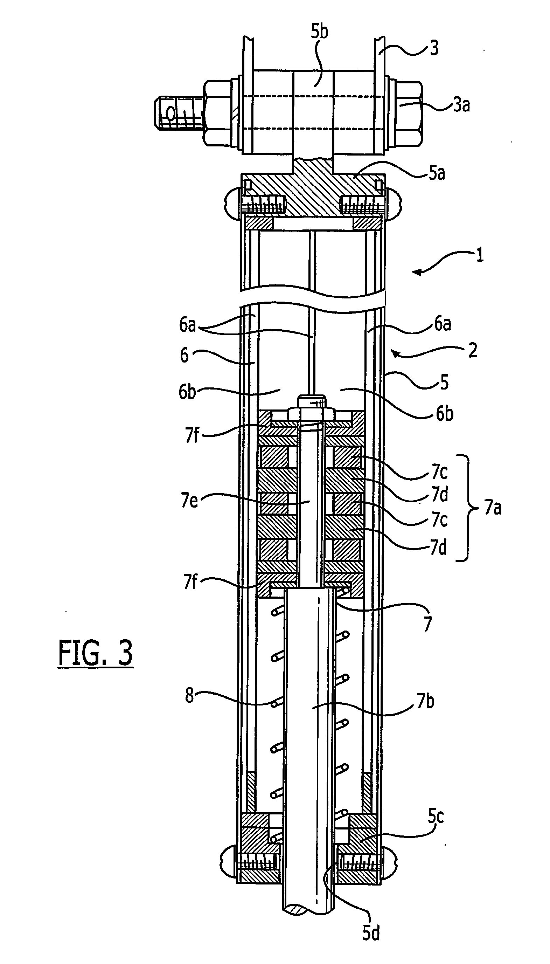

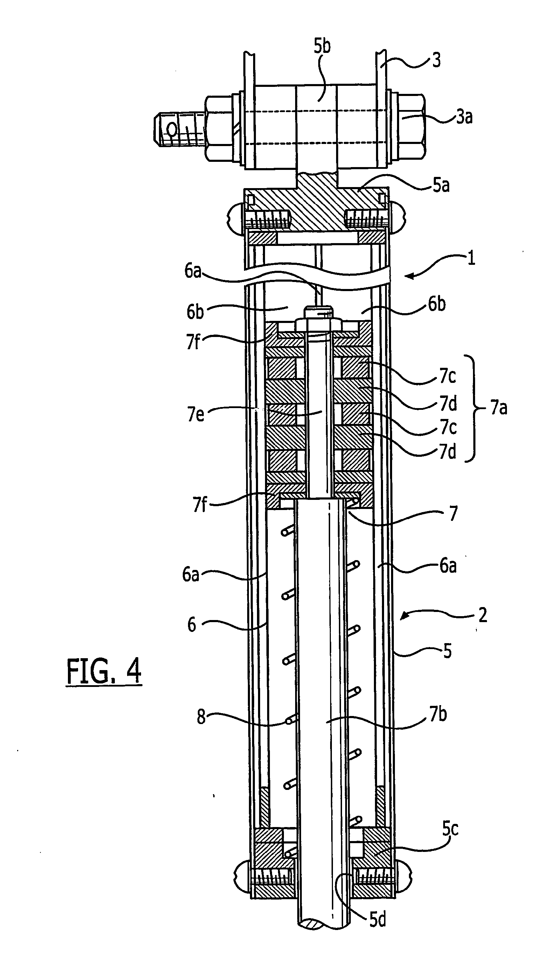

Damper 2 will be explained in detail with reference to Figure 3 and Figure 4. Cylindrical casing 5 comprises a nonmagnetic material such as stainless steel and the cylindrical casing comprises a unitary cover or end cap 5a that further includes handle 5b and the end cap is made integral with one end of the casing. The casing also comprises cover or end cap 5c that includes a central opening 5d. Although for purposes of the description of the first preferred embodiment of the invention the casing is shown and described as cylindrical, the casing may comprise any suitable configuration.

Cylindrical housing 6 made from a magnetic material is located in the casing 5. The housing 6 may assume any acceptable configuration and is not limited to the cylindrical configuration disclosed herein. Housing 6 has a vertical axis in alignment with the vertical axis of casing 5, and housing also comprises a plurality of first movable members 6b that are defined by one or more slots 6a formed in the housing body. The slots are oriented parallel to the vertical, aligned central axis and are radially movable and can contract in a radial direction toward the vertical central axis. As illustrated Figures 1, 2 and 4 housing 6 is cylindrical, being furnished with four equally spaced apart slots 6a positioned so divide it uniformly into four members 6b. Housing 6 may be a tubular member other than one with a cylindrical shape, and there may be one slot 6a. Slot 6a may also extend along the entire length of the housing, or as in the form of working illustrated, it may terminate without reaching one end of housing 6, or it may terminate without reaching both ends. When slot 6a extends across the entire length of housing 6, members 6b are discrete and individually independent. The independent members may not comprise the elasticity of the members 6b defined by the housing slots, however such independent members must be able to be displaced small radial distances in response to the presence of the magnetic attractive force produced by a magnetic field generator.

Piston 7 has a magnetic body generally identified at 7a in Figures 3 and 4 inserted inside housing 6, and comprises rod 7b projecting from one end of magnetic body 7a. Magnetic body 7a is further comprised of a plurality of alternating arrangement of permanent magnetic disks 7c and magnetic pole pieces 7d located between the magnetic members 7c. A magnetic field is produced between the magnets 7c, pole pieces 7d and members 6b and by the presence of the magnetic field the members 6b are drawn radially inwardly toward piston 7a by attractive magnetic forces of the magnetic field. A nut fastened to the rod end clamps the stack of magnets and pole pieces in place between the nut and rod. Permanent magnetic disks 7c are somewhat smaller in diameter than magnetic disk-shaped pole pieces 7d, in order that the outer peripheries of the magnetic disks do not contact the inner periphery of members 6b.

The rod 7b includes small diameter part 7e that passes through magnetic part 7a, and a pair of non-magnetic members such as cotton disks 7f attached on both ends of this small diameter part 7e and maintain permanent magnet disks 7c and magnetic pole pieces 7d as a single body along the rod length. The other end of rod 7b passes through opening 5d in cover 5c of casing 5 and extends outside of casing 5. This other end of rod 7b is fastened to ear 4 which is a handle element. Ear 4 clasps trolley wire T with pair of ear pieces 4a, and trolley wire T is held by fastening with bolt 4b. Tongue piece 4c connected to pair of ear pieces 4a is connected to rod 7b by pin 4d.

Compression spring 8 is positioned inside housing 6. One end of compression spring 8 is held in housing cover 5a having a spring receiving seat, while the other end is held at the end of magnetic body 7a. For purposes of clarity, as the description proceeds, the magnetic body may also be referred to herein as a magnetic field generator. As illustrated in Figure 3, magnetic body 7a is pressed upward in the Figure, and as a result the member 7a is biased inwardly by the spring and consequently rod 7b is drawn into casing 5. Spring 8 is compressed to a prescribed amount in a state where trolley wire T is suspended so that the distance between the trolley wire and suspension wire M is fixed, as shown in Fig. 4 and such distance is at a minimum when external forces acting on the wires are at a minimum.

Hanger 3 is comprised of a belt made of nonmagnetic material such as stainless steel and in use assumes a U-shape. Hanger 3 has both ends connected to handle 5b of casing 5 by nut and bolt combination 3a, and passes over suspension wire M at its curved portion, and is held in place by pin 3b passing through hanger 3 directly beneath suspension wire M. See Figure 3. It should be understood that the hanger may assume any suitable configuration and should not be limited to the configuration disclosed herein.

The operation of the first embodiment motion control device will now be described. When the pantograph of an electric car (not illustrated) passes proximate a device 1, the pantograph presses up against trolley wire T so that rod 7b suspending trolley wire T is urged upwardly further into housing 6. When rod 7b is displaced upwardly piston member is displaced with the rod and spring 8 elongates as the piston and rod relocate in the casing and housing 5 and 6 respectively. When the pantograph passes the device displacement of rod 7b and piston 7a stops, and then the spring compresses and draws the piston 7a and rod 7b into housing 6 toward end cap 5c. As the piston is displaced axially through the housing both toward end cap 5a and end cap 5c the movable members 6b are drawn by the magnetic attractive forces by magnetic field generator 7c in a radial direction as a result of the presence of magnetic field generator proximate the members 6b. Due to the magnetic attractive force of the permanent magnet disks 7c, the members 6b are drawn toward the generator 7a and the inner peripheral surfaces of the fingers contact the pole pieces 7d at the prescribed pressure. Consequently while piston 7 rises and falls, a frictional resistance is created between the piston and housing 6, and this works as a vibration control force on the trolley wire and attenuates the vibrations. Even if wear occurs on the rubbing parts because of the repeated friction of piston 7 and members 6b, because the members 6b contact piston 7 at a constantly fixed pressure as it radially contracts from the presence of the magnetic field, a fixed friction resistance may be obtained without the need to recondition or repair the device 1. Additionally, the device may be manufactured and assembled in a simple manner using well known and conventional methods. The manufacturing precision associated with known devices does not have to be maintained with the first embodiment device 1 of the present invention

The damper 2 absorbs the vibrations of trolley wire T in opposed axial directions, the damper mitigates forces between the pantograph and trolley wire T, and lessens damage to the pantograph and trolley wire T as well as to the various parts used between trolley wire T and suspension wire M.

Further, if damper 2 were installed in a reverse direction and rod 7b were connected to suspension wire M and casing 5 attached to trolley wire T, the effect would be identical to that described herein. If it is necessary to remove the piston 7 from within the housing 6, the first movable members 6b will collapse or contract radially inwardly. When the piston is reinserted into the housing, the flexible members 6b self align around the periphery of the piston. The self aligning feature of the first movable members simplifies the assembly of device 2.

By the present device as explained above, vibration that induces lateral displacement of trolley wire T are well absorbed and mitigated by spring force and frictional resistance, making it possible to plan for less separation of wire from pantograph and prevention of wear to the trolley wire. Also fatigue and loosening of metal fittings because of vibration is decreased so that security and current collection are increased, and since the force of impacts received by the pantograph are lessened, it is possible to have lighter pantograph that moves at a faster speed with less resistance to change in position. Since the housing has its arrangement automatically regulated by piston contraction under magnetic force, there is no need for the strict conservative inspection and parts exchange that accompany wear, and because the construction is comparatively simple and a high degree of mechanical precision is not required, manufacture is made easy and comparatively low in cost.

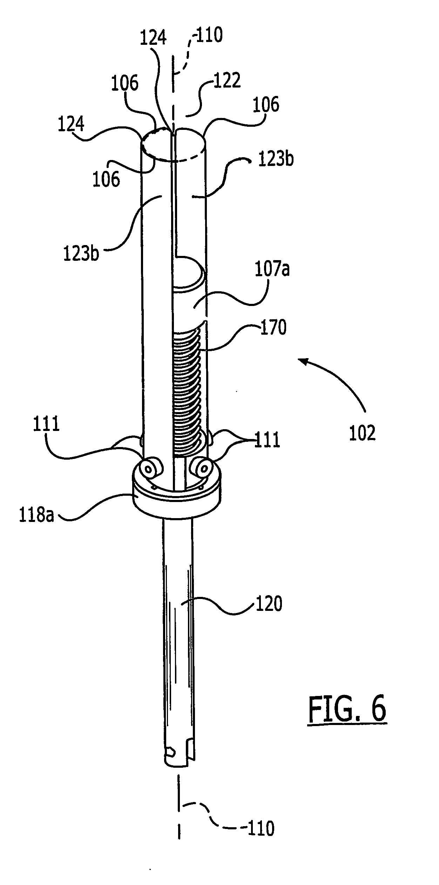

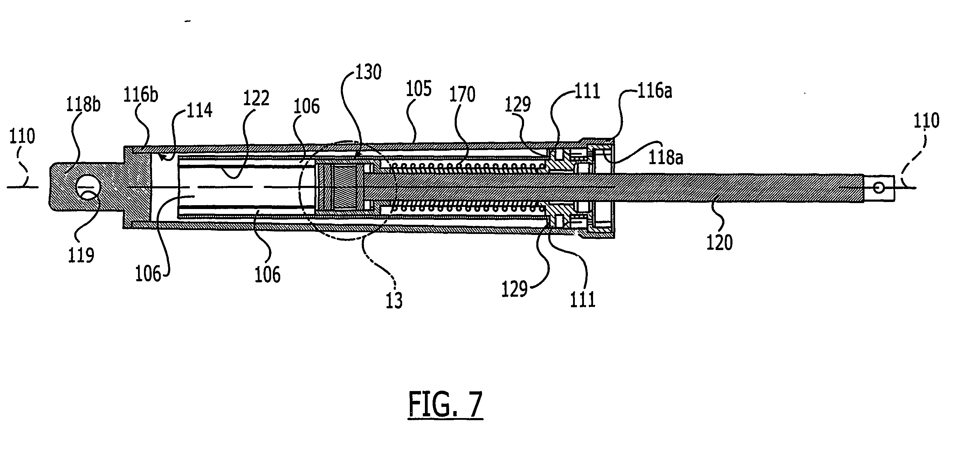

An alternate embodiment magnetically actuated motion control device 102 is illustrated in Figures 6-11. Like first embodiment damper 1, described hereinabove, the alternate embodiment motion control device102 comprises at least one discrete first movable member 106 made from a magnetic material and such at least one first movable member may comprise an elongate slat or finger for example, and the separate members 106 are maintained in a fixed axial orientation by positioning means 111 which may comprise a raised boss for example, like the boss shown in Figures 6 and 7. Each discrete first member is separated from the adjacent member by a slot or gap.

The device also comprises a second movable member 107a movable in a reciprocating manner along longitudinal axis 110 relative to the at least one first movable member 106. As the second movable member 107a is displaced axially, the magnetic field generator 140 produces a magnetic field that produces a magnetic attraction between second movable member 107a and first movable member 106. The magnetic attractive forces serve as a resistance to the axial displacement of the second movable member relative to the at least one first movable member. For purposes of describing the preferred embodiment of the alternate device 102, the magnetic field generator comprises a permanent magnet 112 in combination with pole pieces 113a, 113b and as a result, the resistive damping forces provided by device 102 are of a substantially constant magnitude. The magnetic field generator and displacement of the second movable member will be described in further detail hereinbelow. The device 102 precisely, reliably and efficiently provides the requisite damping forces.

In the event that the damper of the alternate embodiment damper 102 is used in a "clean" environment that is substantially free of entrained contaminants and particulate matter, the first and second movable members 106, 107a and magnetic field generator may not need to be enclosed by a housing and may be used in the open configuration shown in Figure 6. However if the damper 102 is used in an application where leaving the first and second movable members and magnetic field generating device exposed to ambient conditions would negatively affect the functionality of the damper 102, the first and second movable members may be located in the chamber 114 defined by tubular housing member 105, illustrated in Figure 7.

The open and enclosed devices of Figures 6 and 7 are the same with the exception of tubular housing 105 and end cap 118b included in the enclosed configuration of Figure 7. The tubular housing may be comprised of any suitable non-magnetic material such as for example, plastic, aluminum, stainless steel, bronze or copper. For purposes of describing the preferred embodiment of the invention the housing comprises first and second open ends 116a, 116b, however it should be understood that the housing may be closed at either end with an endcap located on the lone open end. The housing may include a taper or draft angle as the housing extends between the housing ends. For example, as shown in Figure 7, the housing tapers inwardly as the housing extends from the first end 116a to the second end 116b. Alternatively, the housing may taper inwardly as it extends from the second end 116b to the first end 116a. The taper is produced during the manufacturing process employed to make the housing, and such manufacturing process may be a conventional molding operation for example. The housing may alternatively have a constant inner dimension between the housing ends.

If the open configuration of device 102 shown in Figure 6 is employed, the device 102 is fixed at end cap member 118a in order to produce required permissible relative motion between the rod member 120 and first end cap 118a. The end cap 118a may be fixed to a frame or other structural component using any suitable, well known means such as by a bracket, fasteners or any combination thereof. The second end cap 118b of the closed device shown in Figure 7 includes a hole 119 adapted to receive a fastener (not shown) that is in turn made integral with a frame or other support member. The fastener may be comprised of a bolt for example. If the closed design is employed, the required permissible relative motion between the rod 120 and end cap 118a is produced by fixing the second end cap 118b to a frame or other member by extending a suitable fastener through hole 119, in the manner described hereinabove. Turning to Figure 7, the open housing ends 116a and 116b are respectively closed by the first and second endcap members 118a and 118b which in turn are fixed to the housing ends, and for purposes of describing the second preferred embodiment of the invention the endcaps are not removable from the housing ends. The end caps may be made integral with the housing ends by any suitable means known to one skilled in the art such as by an epoxy for example. Although the caps are shown and described as being fixed to the housing at the housing ends, it should be understood that the end caps may be removably attached to the housing ends. Alternatively, the end caps may be made integral with the housing ends by a threaded connection or by conventional fasteners such as set screws or bolts for example. In this way, if it is necessary to modify the damping forces supplied by device 102, the magnetic field generating means 130 and/or first movable members may be easily accessed and modified by simply removing the endcaps and sliding the unit comprised of the rod 120, second movable member 107a and first movable members 106 from the housing chamber 114.

The first movable members 106 are comprised of a plurality of elongate members made from a magnetic material, such as steel. Each of the first movable members 106 of device 102 comprises a first end 123a, second end 123b and an arcuate lateral shape however, it should be understood that the first members may also comprise a substantially planar lateral configuration. The first movable members are separate and discrete and are separated from the next adjacent first movable member 106 by a slot 124 defined by the adjacent longitudinal edges of the adjacent members 106. The device 102 of the present invention comprises at least one first movable member, but may comprise any number of first movable members required to produce the desired damping forces. The movable members may comprise a plurality of longitudinally extending wires. However for purposes of describing a second preferred embodiment of the invention the device 102 comprises four discrete members 106 spaced in a circular array around central longitudinal axis 110. Each member 106 is spaced from axis 110 an equal distance, and is offset from the next adjacent member 106 by an angle of ninety degrees (90°). As a result, the members 106 form the circular array or pattern shown in Figure 6. For purposes of illustrating the relative location of second movable member 107a, one of the four first movable members 106 is removed from the device 102 and the edges of the removed first movable member are represented in dashed font in Figure 6. The first movable members define a substantially cylindrical chamber 122 that is adapted to receive second movable member 107a for displacement therein relative to members 106 and along axis 110. The radially free floating characteristic of members 106 permits the first movable members to radially align with the second member for effective operation. Such free radial alignment occurs without regard for the size, shape or contour of the piston member. Additionally, when the piston is located at the free end of the members 106 for insertion in the chamber defined by the members, the ends 123b are freely movable radially outwardly to accommodate the piston.

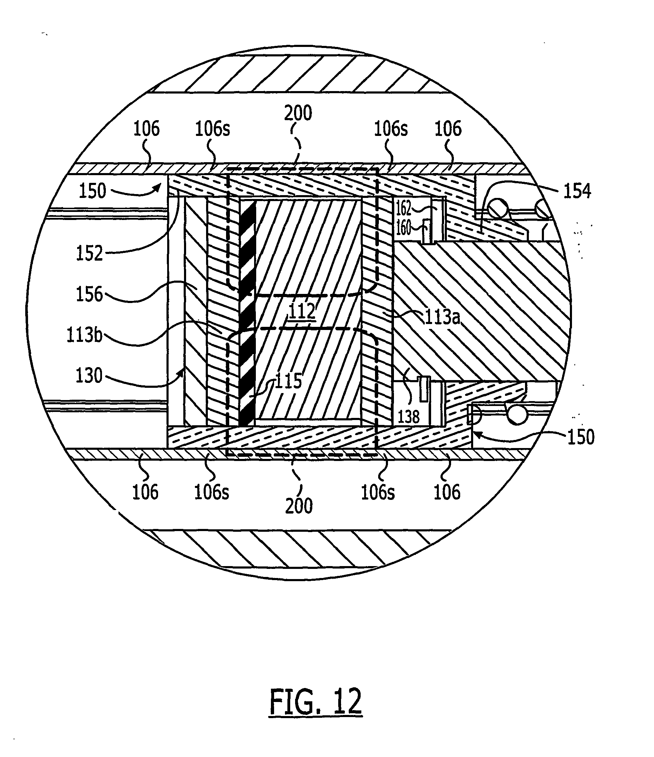

As will be described in greater detail herein below, as the second movable member is displaced along axis 110, the magnetic field generated by the magnets 113a, 113b effects the segment of the first movable member substantially perpendicular to the second movable member. The magnetic field 200 is generally illustrated in the magnified view of the first and second movable members in Figure 12. The segment of the first movable members affected by the presence of the magnetic field is identified as 106s in Figure 12. As a result of the presence of the magnetic field 200, and resulting magnetic attractive force, the movable members, at the segments 106s, are drawn inwardly toward axis 110 a small radial distance. When the second movable member is further displaced the location of the segment 106s is displaced accordingly to a position perpendicular to the member 107a, and the previously inwardly displaced segment relocates outwardly away from axis 110 to the location the segment assumed relative to axis 110 prior to the application of the magnetic attractive forces.

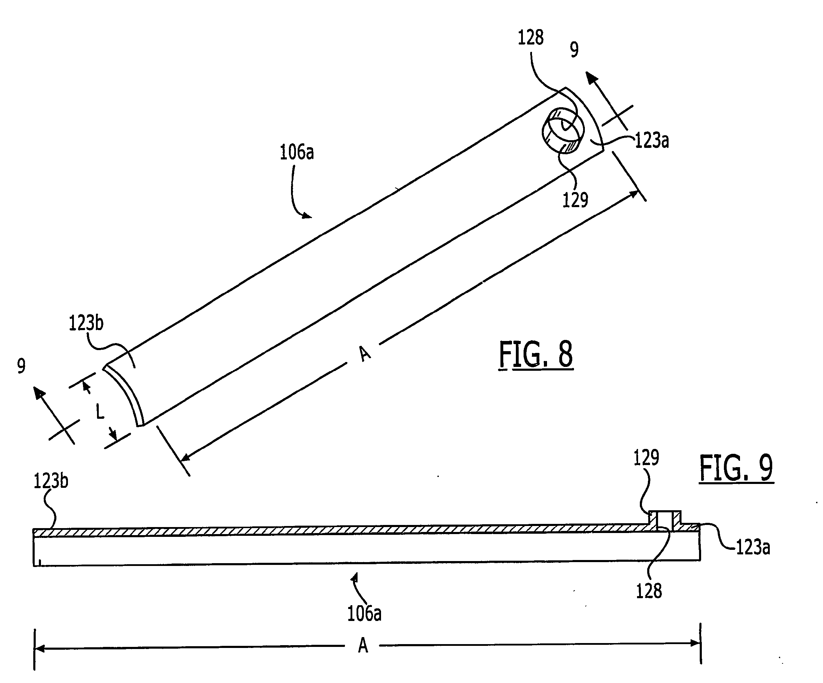

As fixed in the orientation shown in Figure 6, members 106 are rigid axially but are pliable or less rigid in the radial or lateral direction. Non-radially directed displacement of the first members is limited by positioning means 111. As shown in Figures 6 and 7 the positioning means may comprise a plurality of raised boss members that are spaced apart around axis 110 and extend outwardly and away from the axis. The boss members are provided along the periphery of the portion of first end cap member 118a located inwardly from housing end 116a, when the end cap is seated in the first housing end. As shown in Figure 8 and Figure 9 the first movable members include an opening 128 proximate the first end 123a and the opening is dimensioned to receive the respective boss and each opening is surrounded by an annular sleeve 129. The sleeve may be formed during the conventional punching operation used to form the opening 128. The sleeve surrounds the boss as shown in Figure 7 adds rigidity and thereby serves to further prevent non-radially directed displacement of the first movable members and also limit the stresses at the opening 128. The first movable members are typically stamp formed from strip steel. The members 106 are axially stiff to transmit axial attractive forces and are radially free floating and compliant to enable the device of the present invention to reliably and precisely produce the requisite magnitude normal forces.

A number of alternate configurations for the first movable members are shown in Figures 8, 9, 10 and 11. Each of the alternate configurations for the first movable members disclosed herein causes the device 102 of the present invention to provide characteristic damping that is unique to the particular configuration first movable members included in the device 102. The alternate embodiments are made from a strip steel and are radially compliant and axially atiff as discussed hereinabove. Turning to the embodiment first movable member 106a shown in Figures 8 and 9, the first embodiment member 106a comprises a lateral dimension L, and an axial dimension A. The lateral and axial dimensions remain substantially constant between the member ends 123a, 123b. Therefore, the member surface area is substantially constant along the member length, and as a result of the constant surface area, the magnitude of the magnetic attractive force produced between the magnetic field generator 130 and member 106 remains substantially constant as the second movable member is displaced relative to first members 106 along axis 110.

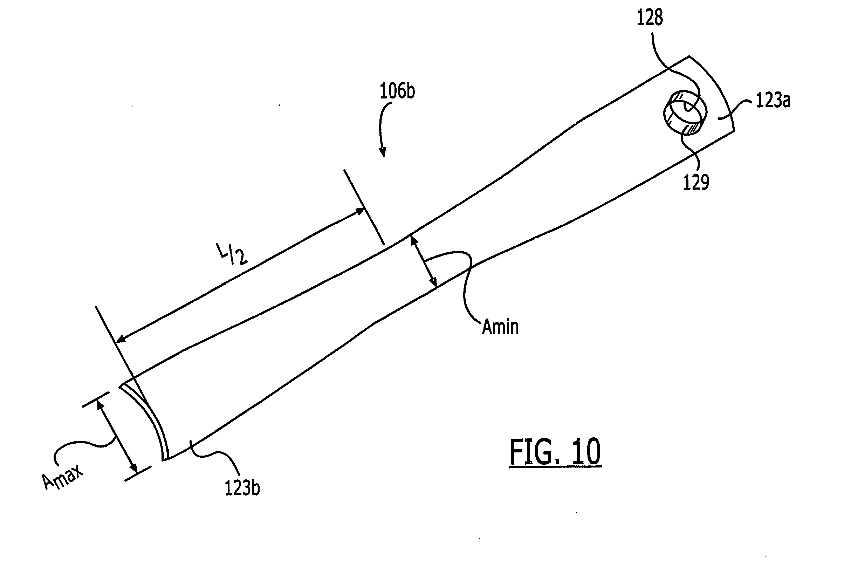

An alternate embodiment first movable member 106b is shown in Figure 10. As shown in Figure 10, the member 106b has an hour glass longitudinal shape with a maximum lateral dimension, Lmax at the member ends 123a, 123b; and a minimum lateral dimension Lmin at a location approximately half the longitudinal distance (L/2) between the member ends. Like member 106a, member 106b has an arcuate lateral shape. The member ends have a maximum lateral dimension and then the maximum lateral dimension tapers down to the minimum area located at the center of the member. The minimum dimension area could be located at any suitable location along the member length. As a result of the variable lateral dimension of the alternate embodiment member 106b, a maximum magnitude magnetic attractive force is produced when the second movable member is proximate either of the member ends 123a, 123b and a minimum magnitude magnetic attractive force is produced when the second movable member is proximate the member length having a lateral dimension of Lmin. The magnitude of the magnetic attractive force between members 106 and 107a varies per unit length as the magnetic field generator is displaced relative to the first movable members between the portion of the member having a dimension Lmin and the member ends. The magnetic field increases as the second movable member is displaced toward either end and decreases as the second movable member is displaced toward the center of the member 106b.

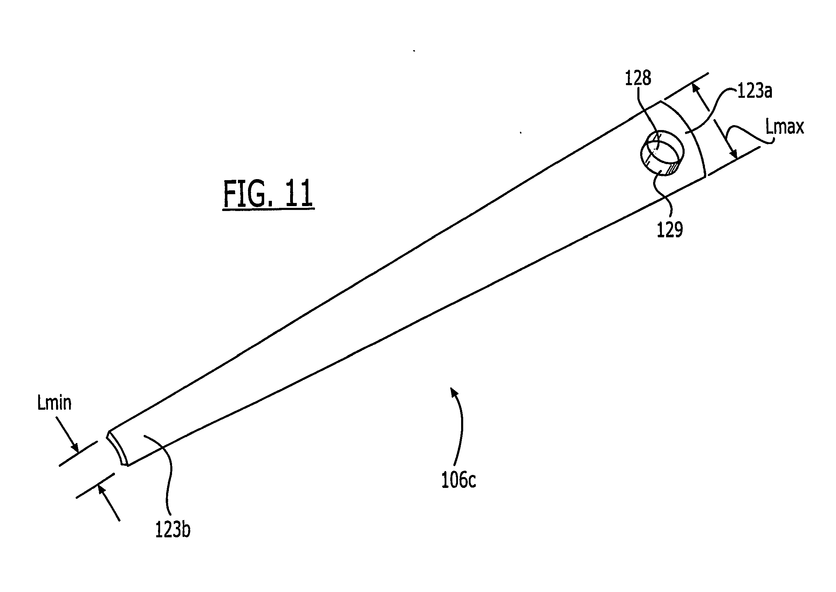

A further alternate embodiment first movable member 106c is shown in Figure 11. The movable member 106c provides variable resistance forces as the magnitude of the associated magnetic attractive force is varied between the first and second ends 123a, 123b. The member 106c has a maximum lateral dimension Lmax at the first end 123a, and has a minimum lateral dimension Lmin at the second end 123b. The magnitude of the magnetic attractive force decreases as the magnetic field generator housed in member 107a is displaced from end 123a to end 123b, and increases as the magnetic field generator housed in member 107a is displaced from end 123b to end 123a. The movable member 106c has an arcuate lateral shape.

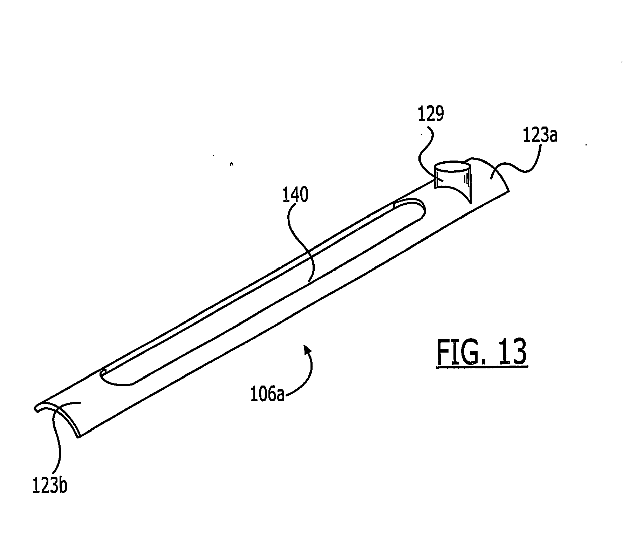

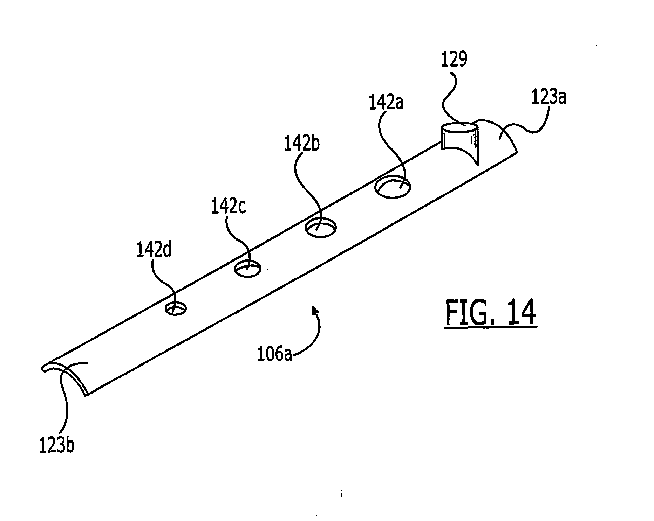

If the member 106a is used, the member may be modified so that variable magnitude damping is supplied. Figures 13 and 14 show two means for obtaining variable damping forces in a member 106 with a constant lateral dimension. In Figure 14, an axially extending slot is provided in the member. A minimum magnitude magnetic attractive force is provided when the second movable member and associated magnetic field generator are located proximate the slot. The maximum magnitude magnetic attractive force is produced when the second movable member 107a and associated magnetic field generator 130 are located at either member end 123a, 123b.

Member 106a may alternatively be modified in the manner shown in Figure 14 to provide variable magnitude damping. In the modified member 106a shown in Figure 14 a plurality of axially aligned openings 142a, 142b, 142c and 142d are provided in the member 106a between the member ends 123a and 123b. The minimum magnitude magnetic attractive force occurs when the second movable member and magnetic field generator are located proximate the largest diameter opening 142a. The maximum magnitude magnetic attractive force is produced when the second movable member and associated magnetic field generator are located between adjacent openings or at the member ends 123a, 123b. For each opening provided along the length of member 106a, when the second movable member and associated magnetic field generator are aligned with each opening the resultant magnetic field: is greater in magnitude at opening 142b than at opening 142a; is greater in magnitude at opening 142c than at 142b; and is greater in magnitude at opening 142d than at opening 142c. A number of means for providing variable damping forces are disclosed by modifying the configuration of first movable members 106. Applicants submit that the alternate embodiments of members 106 illustrated in Figures 8, 9, 10, 11, 13, 14 are examples of suitable first movable members to provide substantially constant and variable magnetic attractive forces. Modifications of the first movable members may be made to provide the desired magnitude damping forces by producing the desired magnetic attractive forces.

The second movable member 107a is comprised of an outer hollow piston or sleeve member 150 with first and second open ends 152, 154 respectively. The member 150 is made from any suitable non-magnetic material such as plastic for example. End 138 of shaft 120 is slid through member end 152 and is located in the hollow interior of the member 150. A cap 156 is placed at the first member end 152 and serves to close the first open end. The plate and shaft end are separated by a distance. The plate may be maintained at the first end by any suitable means such as by a suitable fastener, adhesive substance or force fit for example. The magnetic field generator 130 is located in the hollow interior of member 150. The magnet 112, and pole pieces 113a, 113b are oriented in a stacked relationship between plate 156 and shaft end 138 with pole piece 113b located against plate 156, pole piece 113a located against rod end 138 and permanent magnet member 112 between the pole pieces. A magnetic field 200 is produced between the magnet, 112, pole pieces 113a, 113b and first movable members 106. See Figure 12. As shown and described, the second movable member is movable within the chamber defined by the array of members 106, however it should be understood that in the alternative it is contemplated that the second movable member may surround the first movable members and include an opening or other means for permitting the first movable members to pass through the second movable member as the second movable member is displaced relative to the first movable members outwardly from the first movable members.

A spacer element 115 may be inserted between the members that produce the magnetic field to affect the magnitude of the field. As shown in Figure 12, spacer element 115 is located between members 112 and 113b to decrease the resultant magnetic field strength. The spacer is made from a non-magnetic material. The removable spacer element facilitates easy adjustment of the magnetic field strength to accommodate for dimensional variations in the components where such variations may affect the magnetic field strength. A conventional snap ring 160 is located in a groove along the length of rod 120 at end 138 and a washer 162 is sandwiched between the snap ring and sleeve end 154. As recognized by somebody skilled in the relevant art, the combination of the snap ring and washer serves to maintain the assembly unit and also limits and distributes stresses that develop during use between the rod and movable member 107a.

The permanent magnet member 112 may be replaced by at least one electromagnetic coil member in a fixed location in a magnetically permeable core. In such an alternate embodiment the one or more electromagnetic coils may be set in piston 154. A conventional current source may be combined with the coils to selectively apply current to the coils through a conventional electrical connection such as wires and current flowing through the coils creates a magnetic field that draws the first movable member toward the second movable member in the manner generally described hereinabove. Using an electromagnetic coil and current source to produce a magnetic field is of conventional design well known to one skilled in the art and such a combination is shown and described in U.S. Patent No. 6,378,671, issued assigned to Lord Corporation of Erie, Pennsylvania the terms of which are incorporated herein by specific reference. The electrically switchable coils and current source allow the damping levels supplied by the device 102 to be varied by applying the current in the desired selective manner and with the required magnitude.

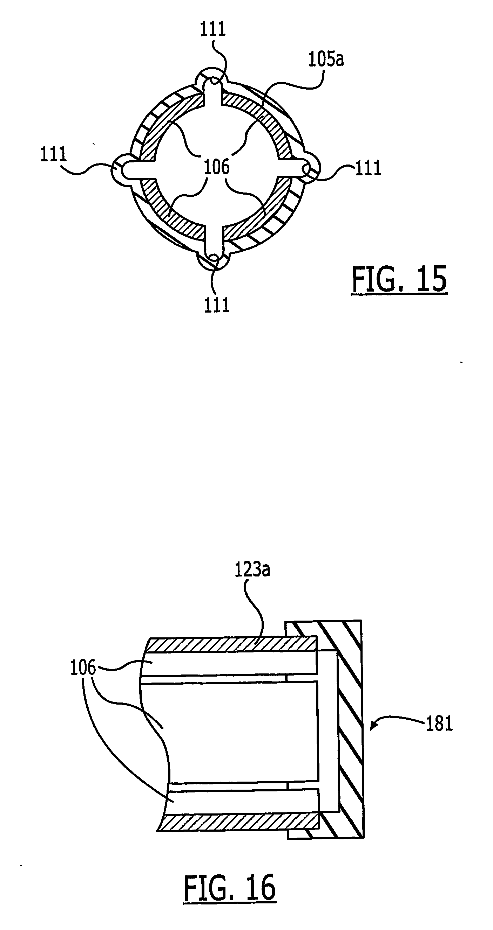

A biasing member 170 such as a coil spring for example is located between first end cap 118a and the second end 154 of sleeve 150. The biasing member biases the second movable member 107a towards the second member end 123b. The biasing member provides a means for resisting extension of the device 102 in addition to the resistance to compression and extension of device 102 provided by the magnetic field 200.
[0057] Figures 15, 16 and 17 illustrate alternate embodiment means for securing the first movable members in a fixed axial position within device 102. In Figure 15, the first movable members 106 are made integral with a tubular, non-magnetic housing 105a. It is preferred that the non-magnetic housing be comprised of an elastomeric material. The first movable members 106 may be made integral with the housing via a bonding process after the housing and member are manufactured during a conventional process for example. The housing includes a plurality of longitudinally extending channels 111 with each channel being located between a pair of adjacent first movable members 106. As shown in Figure 15, the channels are spaced apart from the next adjacent channel by an angle of ninety degrees (90). The channels extend along the length of the housing and extend radially outwardly beyond the outer housing periphery. The channels facilitate the radial displacement of the members 106 in device 102 in the manner previously described. Conversely, the members are substantially fixed axially. The housing 105a may be used in combination with the second movable member 107a and end caps 118a, 118b previously described. However in end cap 118b the boss members may be eliminated.

In Figure 16, the first movable members are retained in a fixed axial location by making the movable members 106 integral with a non-magnetic plug 181 at the member ends 123a. The plug may be made from an elastomeric material and the members may be made integral with the members during a conventional molding process well known to one skilled in the art. In the embodiment of Figure 16, the opposite ends 123b of the members 106 are free so that the each movable member is supported in a cantilever fashion.

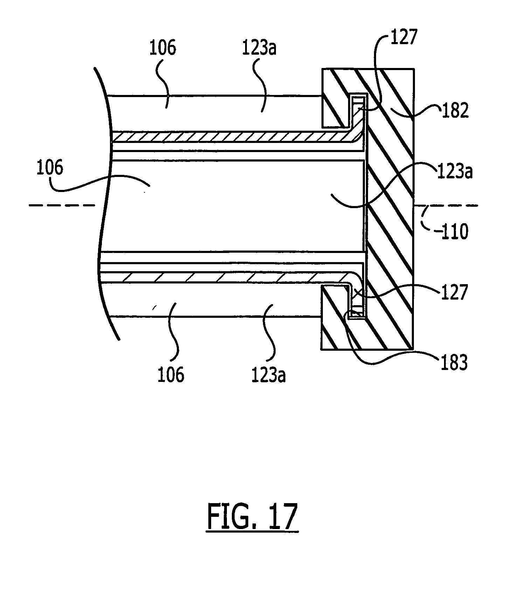

In Figure 17, a further alternate configuration means for axially securing the first movable members is shown. In the further alternate configuration of Figure 17 each first movable member comprises a laterally extending flange 127 at the first member end 123a. As oriented for use, the flange members are directed outwardly relative to axis 110. The flange 127 of each member 106 is seated in an annular groove 183 provided along the interior of the non-magnetic collar 182 located at the first movable member end. The collar enshrouds the flange members. The second member ends 123b (not shown) are free so that the movable members are supported in a cantilever fashion. By the alternate embodiment of Figure 17, the members are free to move radially while axial displacement of the members is restricted by the interconnection of the flange members and collar 182. Alternatively, the flange members 127 could be directed radially outwardly and located in an annular groove member 183 formed in the non-magnetic collar.

In operation, as vibratory disturbances are imparted to device 102 the second movable member 107a is displaced axially along longitudinal axis 110. As the member 107a is displaced, the discrete radially movable first movable members 106 are drawn toward the second movable member housing 154 by the magnetic attractive forces between the first movable members and the magnetic field generator 130. For purposes of the invention the members are drawn or displaced radially inwardly. The magnetic attractive forces provide damping forces required to offset the vibratory disturbances. The damping forces are applied at the sliding interface between members 106 and 107a and normal to the direction of displacement of the second movable element. As the elements wear over time, the normal force remains constant. Additionally, the normal forces remain constant despite variations in the sizes of component parts.

The present invention has been described with reference to exemplary embodiments. The exemplary embodiments are illustrative and should not be considered restrictive in any way. The scope of the invention is given by the appended claims, and all variations and equivalents which fall within the range of the claims are intended to be embraced therein.

## Claims

1. A magnetically actuated motion control device (1), comprising:
(a) at least one first movable member (6,106) of magnetic material:
(b) a second member (7,107a) comprising a piston movable along an axis, and proximate said at least one first movable member (6,106), and disposed radially outwardly of the axis, said second movable member (7,107a) being movable relative to the or each first movable member (6,106); and
(c) a permanent magnet magnetic field generator (7c,140) which causes the at least one first movable member (6,106) to be attracted radially inwardly and into contact with the second movable member (7,107a) when a magnetic field is supplied by said magnetic field generator (7c,140) to thereby produce a motion control force,
**characterised in that** the said at least one movable member comprises a discrete elongate slat.

2. The magnetically actuated motion control device as claimed in claim 1 wherein the device comprises a plurality of slats, separated from adjacent slats by a slot or gap.

3. The magnetically actuated motion control device as claimed in claim 2 wherein the slats are spaced apart in a circular array about the said axis.

4. The magnetically actuated motion control device as claimed in claim 3 wherein the slats define a chamber, said second member being located in said chamber.

5. The magnetically actuated motion control device as claimed in claim 3 wherein each of said slats is movable radially towards and away from said second movable member.

6. The magnetically actuated motion control device as claimed in claim 1 wherein the or each of the slats is magnetically attracted to the second movable member in a radial direction.

7. The magnetically actuated motion control device as claimed in claim 1 wherein the or each of said slats is maintained in a required longitudinal position by positioning means.

8. The magnetically actuated motion control device as claimed in claim 7 wherein said positioning means is comprised of a boss (111).

9. The magnetically actuated motion control device as claimed in claim 2 wherein each of said slats comprises a lateral dimension and an axial dimension, the lateral dimension of at least one slat being variable per unit length of said first movable member.

10. The magnetically actuated motion control device as claimed in claim 9 wherein each of the slats has opposed ends, and wherein the lateral dimension is at a minimum at a position approximately half the distance between the opposed ends.

11. The magnetically actuated motion control device as claimed in claim 1 wherein the device further comprises an outer housing member that defines a housing chamber, the at least one first movable member and the second movable member being located within said housing chamber.

12. The magnetically actuated motion control device as claimed in claim 11 wherein the or each slat is between the outer housing member and the piston.

13. The magnetically actuated motion control device as claimed in claim 1 wherein the second movable member is comprised of two poles, said permanent magnet magnetic field generator being located between the poles.

14. The magnetically actuated motion control device as claimed in claim 12 wherein the poles and magnetic field generator are substantially located in a second movable member housing.

15. The magnetically actuated motion control device as claimed in claim 14 wherein the second movable member housing is made from a non-magnetic material.

16. The magnetically actuated motion control device as claimed in claim 1 wherein the device further comprises an outer housing defining a housing chamber, said outer housing comprising a first end and a second end, the at least one first movable member and second movable being located in said housing chamber, said first and second housing ends being substantially closed by first and second endcaps.

17. The magnetically actuated motion control device as claimed in claim 1 wherein the device further comprises an outer housing defining a housing chamber, said outer housing comprising a first open end and a second closed end, the at least one first movable member and second movable member being located in said housing chamber, said first housing end being substantially closed by a first endcap.

18. The magnetically actuated motion control device as claimed in claim 16 wherein the device further comprises biasing means for biasing the second movable member toward the second housing end.

19. The magnetically actuated motion control device as claimed in claim 18 wherein said biasing means comprises a spring member and said spring member is located between the first endcap and the second movable member.

20. The magnetically actuated motion control device as claimed in claim 1 wherein the second movable member is made integral with a shaft member.

21. The magnetically actuated motion control device of claim 1, wherein the magnetic field generator comprises at least one permanent magnet and two poles.

22. The magnetically actuated motion control device as claimed in claim 21 wherein the magnetic field generator is further comprised of, and a non-magnetic spacer element located between the magnet and one of the poles.

23. The magnetically actuated motion control device as claimed in claim 22 wherein the spacer is removably located between the magnet and the pole.

24. The magnetically actuated motion control device as claimed in claim 1 wherein the device supplies substantially constant damping forces.

25. The magnetically actuated motion control device as claimed in claim 1 wherein the device supplies variable damping forces.

26. The magnetically actuated motion control device as claimed in claim 25 wherein the at least one first movable member comprises an hourglass shape.

27. The magnetically actuated control device as claimed in claim 25 wherein the at least one first movable member has a maximum lateral dimension at one end and a minimum lateral dimension at the opposite end.

28. The magnetically actuated motion control device as claimed in claim 25 wherein the at least one first movable member has a plurality of openings spaced along the first movable member.

29. The magnetically actuated motion control device as claimed in claim 25 wherein the at least one first movable member has a plurality of openings spaced along the first movable member.

30. The magnetically actuated motion control device as claimed in claim 24 wherein the at least one first movable member has a first dimension and a second dimension, the first and second dimensions being substantially constant.

31. A wire suspension apparatus (1) for suspending a first wire (T) from a suspension wire (M) the apparatus having a magnetically actuated motion control device (1) as claimed in any preceding claim for controlling the motion between the first and suspension wires, wherein the first movable member is connectable to either the first wire or the suspension wire, and the second movable member is connectable to the other of the first or suspension wires.

## Patentansprüche

1. Magnetisch betätigte Bewegungssteuereinrichtung (1) mit
a) wenigstens einem ersten beweglichen Körper (6, 106) aus magnetischem Material ;
b) einem zweiten Körper (7, 107a) mit einem entlang einer Achse und dem wenigstens einen ersten beweglichen Körper (6, 106) benachbart angeordneten sowie radial außerhalb der Achse liegenden beweglichen Kolben, wobei der zweite bewegliche Körper (7, 107a) in Bezug auf den oder jeden ersten beweglichen Körper (6, 106) beweglich ist; und
c) einem permanentmagnetischen Feldgenerator (7c, 140), der bewirkt, daß der wenigstens eine erste bewegliche Körper (6, 106) radial nach innen angezogen und mit dem zweiten beweglichen Körper (7, 107a) in Berührung gebracht wird, wenn durch den magnetischen Feldgenerator (7c, 140) ein magnetisches Feld angelegt wird, um **dadurch** eine Bewegungssteuerkraft zu erzeugen;
**dadurch gekennzeichnet, daß** wenigstens ein beweglicher Körper ein einzelnes längliches Band aufweist.

2. Magnetisch betätigte Bewegungssteuereinrichtung nach Anspruch 1, **dadurch gekennzeichnet, daß** die Einrichtung mehrere Bänder aufweist, die durch einen Schlitz oder Spalt von benachbarten Bändern getrennt sind.

3. Magnetisch betätigte Bewegungssteuereinrichtung nach Anspruch 2, **dadurch gekennzeichnet, daß** die Bänder nebeneinander in einer kreisrunden Reihe um die Achse angeordnet sind.

4. Magnetisch betätigte Bewegungssteuereinrichtung nach Anspruch 3, **dadurch gekennzeichnet, daß** die Bänder eine Kammer begrenzen und daß der zweite Körper in dieser Kammer angeordnet ist.

5. Magnetisch betätigte Bewegungssteuereinrichtung nach Anspruch 3, **dadurch gekennzeichnet, daß** jedes der Bänder in radialer Richtung auf den zweiten beweglichen Körper zu und von ihm weg bewegbar ist.

6. Magnetisch betätigte Bewegungssteuereinrichtung nach Anspruch 1, **dadurch gekennzeichnet, daß** das oder jedes Band von dem zweiten beweglichen Körper in einer radialen Richtung magnetisch angezogen wird.

7. Magnetisch betätigte Bewegungssteuereinrichtung nach Anspruch 1, **dadurch gekennzeichnet, daß** das oder jedes Band durch eine Positionierungsvorrichtung in einer geforderten Längsposition gehalten wird.

8. Magnetisch betätigte Bewegungssteuereinrichtung nach Anspruch 7, **dadurch gekennzeichnet, daß** die Positionierungsvorrichtung eine Nabe (111) ist.

9. Magnetisch betätigte Bewegungssteuereinrichtung nach Anspruch 2, **dadurch gekennzeichnet, daß** jedes Band eine seitliche Abmessung und eine axiale Abmessung aufweist, wobei die seitliche Abmessung wenigstens eines Bandes um die Einheitslänge des ersten beweglichen Körpers variabel ist.

10. Magnetisch betätigte Bewegungssteuereinrichtung nach Anspruch 9, **dadurch gekennzeichnet, daß** jedes Band entgegengesetzte Enden aufweist und daß die seitliche Abmessung in einer Lage, die annähernd der Hälfte des Abstandes zwischen den entgegengesetzten Enden entspricht, ein Minimum ist.

11. Magnetisch betätigte Bewegungssteuereinrichtung nach Anspruch 1, **dadurch gekennzeichnet, daß** die Einrichtung ferner einen äußeren Gehäusekörper aufweist, der eine Gehäusekammer bildet und daß wenigstens ein erster beweglicher Körper und der zweite bewegliche Körper in der Gehäusekammer angeordnet sind.

12. Magnetisch betätigte Bewegungssteuereinrichtung nach Anspruch 11, **dadurch gekennzeichnet, daß** das oder jedes Band zwischen dem äußeren Gehäusekörper und dem Kolben angeordnet ist.

13. Magnetisch betätigte Bewegungssteuereinrichtung nach Anspruch 1, **dadurch gekennzeichnet, daß** der zweite bewegliche Körper aus zwei Polen und dem permanentmagnetischen Feldgenerator besteht, der zwischen den Polen angeordnet ist.

14. Magnetisch betätigte Bewegungssteuereinrichtung nach Anspruch 12, **dadurch gekennzeichnet, daß** die Pole und der magnetische Feldgenerator im wesentlichen in einem zweiten beweglichen Gehäusekörper angeordnet sind.

15. Magnetisch betätigte Bewegungssteuereinrichtung nach Anspruch 14, **dadurch gekennzeichnet, daß** der zweite bewegliche Gehäusekörper aus nichtmagnetischem Material besteht.

16. Magnetisch betätigte Bewegungssteuereinrichtung nach Anspruch 1, **dadurch gekennzeichnet, daß** die Einrichtung ferner ein äußeres Gehäuse aufweist, das eine Gehäusekammer bildet und daß das äußere Gehäuse mit einem ersten und einem zweiten Ende versehen ist und der wenigstens eine erste bewegliche Körper und zweite bewegliche Körper in der Gehäusekammer liegen, wobei die erste und zweiten Gehäuseenden im wesentlichen durch erste und zweite Endkappen geschlossen sind.

17. Magnetisch betätigte Bewegungssteuereinrichtung nach Anspruch 1, **dadurch gekennzeichnet, daß** die Einrichtung ein äußeres Gehäuse aufweist, die eine Gehäusekammer bildet, und daß das äußere Gehäuse mit einem ersten offenen Ende und einem zweiten geschlossenen Ende versehen ist, wobei der wenigstens eine erste bewegliche Körper und der zweite bewegliche Körper in der Gehäusekammer angeordnet sind und das erste Gehäuseende durch eine erste Endkappe im wesentlichen geschlossen ist.

18. Magnetisch betätigte Bewegungssteuereinrichtung nach Anspruch 16, **dadurch gekennzeichnet, daß** die Einrichtung des weiteren eine Federvorrichtung aufweist, die den zweiten beweglichen Körper gegen das zweite Gehäuseende drückt.

19. Magnetisch betätigte Bewegungssteuereinrichtung nach Anspruch 18, **dadurch gekennzeichnet, daß** die Federvorrichtung einen Federkörper aufweist, und daß der Federkörper zwischen der ersten Endkappe und dem zweiten beweglichen Körper angeordnet ist.

20. Magnetisch betätigte Bewegungssteuereinrichtung nach Anspruch 1, **dadurch gekennzeichnet, daß** der zweite bewegliche Körper mit einem Schaftkörper untrennbar verbunden ist.

21. Magnetisch betätigte Bewegungssteuereinrichtung nach Anspruch 1, **dadurch gekennzeichnet, daß** der magnetische Feldgenerator wenigstens einen Permanentmagneten und zwei Pole aufweist.

22. Magnetisch betätigte Bewegungssteuereinrichtung nach Anspruch 21, **dadurch gekennzeichnet, daß** der magnetische Feldgenerator ferner mit einem nichtmagnetischen Abstandselement versehen ist, das zwischen dem Magneten und einem der Pole liegt.

23. Magnetisch betätigte Bewegungssteuereinrichtung nach Anspruch 22, **dadurch gekennzeichnet, daß** das Abstandselement zwischen dem Magneten und dem Pol entfernbar angeordnet ist.

24. Magnetisch betätigte Bewegungssteuereinrichtung nach Anspruch 1, **dadurch gekennzeichnet, daß** die Einrichtung im wesentlichen konstante Dämpfungskräfte liefert.

25. Magnetisch betätigte Bewegungssteuereinrichtung nach Anspruch 1, **dadurch gekennzeichnet, daß** die Einrichtung veränderliche Dämpfungskräfte liefert.

26. Magnetisch betätigte Bewegungssteuereinrichtung nach Anspruch 25, **dadurch gekennzeichnet, daß** der wenigstens eine erste bewegliche Körper die Form einer Sanduhr hat.

27. Magnetisch betätigte Bewegungssteuereinrichtung nach Anspruch 25, **dadurch gekennzeichnet, daß** der wenigstens eine erste bewegliche Körper an dem einen Ende eine maximale seitliche Abmessung aufweist und an dem entgegengesetzten Ende eine minimale seitliche Abmessung.

28. Magnetisch betätigte Bewegungssteuereinrichtung nach Anspruch 25, **dadurch gekennzeichnet, daß** der wenigstens eine erste bewegliche Körper mehrere Öffnungen aufweist, die mit Abstand längs des ersten beweglichen Körpers angeordnet sind.

29. Magnetisch betätigte Bewegungssteuereinrichtung nach Anspruch 25, **dadurch gekennzeichnet, daß** der wenigstens eine erste bewegliche Körper mehrere Öffnungen aufweist, die entlang des ersten beweglichen Körpers mit Abstand verteilt sind.

30. Magnetisch betätigte Bewegungssteuereinrichtung nach Anspruch 24, **dadurch gekennzeichnet, daß** der wenigstens eine erste bewegliche Körper eine erste Abmessung und eine zweite Abmessung aufweist, die im wesentlichen konstant sind.

31. Drahtaufhängungsgerät (1) zum Aufhängen eines ersten Drahtes (T) an einem Aufhängedraht (M), wobei das Gerät eine magnetisch betätigte Bewegungssteuereinrichtung (1) gemäß irgendeinem vorhergehenden Anspruch aufweist, mit der die Bewegung zwischen dem ersten und dem zweiten Aufhängedraht steuerbar ist, wobei der erste bewegliche Körper entweder mit dem ersten Draht oder dem Aufhängedraht verbindbar ist und der zweite bewegliche Körper mit dem entsprechenden anderen Draht des ersten Drahtes oder Aufhängedrahtes verbindbar ist.

## Revendications

1. Dispositif de contrôle de mouvement (1) à commande magnétique, comprenant :
(a) au moins un premier élément mobile (6, 106) en matériau magnétique ;
(b) un deuxième élément (7, 107a) comprenant un piston mobile le long d'un axe, à proximité dudit ou desdits premiers éléments mobiles (6, 106), et disposé radialement vers l'extérieur par rapport à l'axe, ledit deuxième élément mobile (7, 107a) étant mobile par rapport au premier ou à chaque premier élément mobile (6, 106); et
(c) un générateur de champ magnétique (7c, 140) à aimant permanent qui fait en sorte que le ou les premiers éléments mobiles (6, 106) soient attirés radialement vers l'intérieur et viennent en contact avec le deuxième élément mobile (7, 107a) lorsqu'un champ magnétique est généré par ledit générateur de champ magnétique (7c, 140) pour ainsi produire une force de contrôle de mouvement,
**caractérisé en ce que** ledit ou lesdits premiers éléments mobiles comprennent une lame allongée discrète.

2. Dispositif de contrôle dé mouvement à commande magnétique selon la revendication 1, dans lequel le dispositif comprend plusieurs lames séparées des lames adjacentes par une fente ou par un espace.

3. Dispositif de contrôle dé mouvement à commande magnétique selon la revendication 2, dans lequel les lames sont espacées les unes des autres suivant un agencement circulaire autour dudit axe.

4. Dispositif de contrôle de mouvement à commande magnétique selon la revendication 3, dans lequel les lames définissent une chambre, ledit deuxième élément étant situé dans ladite chambre.

5. Dispositif, de contrôle de mouvement à commande magnétique selon la revendication 3, dans lequel chacune desdites lames est mobile radialement vers ledit deuxième élément mobile et à distance de celui-ci.

6. Dispositif de contrôle de mouvement à commande magnétique selon la revendication 1, dans lequel la ou chaque lame est attirée magnétiquement vers le deuxième élément mobile dans une direction radiale.

7. Dispositif de contrôle de mouvement à commande magnétique selon la revendication 1, dans lequel la ou chaque laine est maintenue dans une position longitudinale requise par un moyen de positionnement.

8. Dispositif de contrôle de mouvement à commande magnétique selon la revendication 7, dans lequel ledit moyen de positionnement est constitué d'une protubérance (111).

9. Dispositif de contrôle de mouvement à commande magnétique selon la revendication 2, dans lequel chacune desdites lames comprend une dimension latérale et une dimension axiale, la dimension latérale de la ou de chaque lame étant variable par unité de longueur dudit premier élément mobile.

10. Dispositif de contrôle de mouvement à commande magnétique selon la revendication 9, dans lequel chacune des lames a des extrémités opposées, la dimension latérale étant au minimum dans une position approximativement à mi-distance des extrémités opposées.

11. Dispositif de contrôle de mouvement à commande magnétique selon la revendication 1, dans lequel le dispositif comprend en outre un 'élément formant logement extérieur qui définit une chambre de logement, le ou les premiers éléments mobiles et le deuxième élément mobile étant situés dans ladite chambre de logement.

12. Dispositif de contrôle de mouvement à commande magnétique selon la revendication 11, dans lequel la ou chaque lame est située entre l'élément formant logement extérieur et le piston.

13. Dispositif de contrôle de mouvement à commande magnétique selon la revendication 1, dans lequel le deuxième élément mobile est constitué de deux pôles, ledit générateur de champ magnétique à aimant permanent étant situé entre les pôles.

14. Dispositif de contrôlé de mouvement à commande magnétique selon la revendication 12, dans lequel les pôles et le générateur de champ magnétique sont sensiblement situés dans un logement du deuxième élément mobile.

15. Dispositif de contrôle de mouvement à commande magnétique selon la revendication 14, dans lequel le logement du deuxième élément mobile est constitué d'un matériau non magnétique.

16. Dispositif de contrôle de mouvement à commande magnétique selon la revendication 1, dans lequel le dispositif comprend en outre un logement extérieur définissant une chambre de logement, ledit logement extérieur comprenant une première extrémité et une seconde extrémité, le ou les premiers éléments mobiles .et le deuxième élément mobile étant situés dans ladite chambre de logement, lesdites première et seconde extrémités du logement étant sensiblement fermées par des premier et second bouchons.

17. Dispositif de contrôle de mouvement à commande magnétique selon la revendication 1, dans lequel le dispositif comprend en outre un logement extérieur définissant une chambre de logement, ledit logement extérieur comprenant une première extrémité ouverte et une seconde extrémité fermée, le ou les premiers éléments mobiles et le deuxième élément mobile étant situés dans ladite chambre de logement, ladite première extrémité du logement étant sensiblement fermée par un premier bouchon.

18. Dispositif de contrôle de mouvement à commande magnétique selon la revendication 16, dans lequel le dispositif comprend en outre un moyen de sollicitation destiné à solliciter le second élément mobile vers là seconde extrémité du logement.

19. Dispositif de contrôle de mouvement à commande magnétique selon la revendication 18, dans lequel ledit moyen de sollicitation comprend un élément formant ressort, ledit élément formant ressort étant situé entre le premier bouchon et le deuxième élément mobile.

20. Dispositif de contrôle de mouvement à commande magnétique selon la revendication 1, dans lequel le deuxième élément mobile est réalisé d'un seul tenant avec un élément formant arbre.

21. Dispositif dé contrôle de mouvement à commande magnétique selon la revendication 1, dans lequel le générateur de champ magnétique comprend au moins un aimant permanent et deux pôles.

22. Dispositif de contrôle de mouvement à commande magnétique selon la revendication 21, dans lequel le générateur de champ magnétique est en outre constitué d'un élément d'espacement non magnétique situé entre l'aimant et l'un des pôles.

23. Dispositif de contrôle de mouvement à commande magnétique selon la revendication 22, dans lequel l'élément d'espacement est situé de manière amovible entre l'aimant et le pôle.

24. Dispositif de contrôle de mouvement à commande magnétique selon la revendication 1, dans lequel le dispositif produit des forces d'amortissement sensiblement constantes.

25. Dispositif de contrôle de mouvement à commande magnétique selon là revendication 1, dans lequel le dispositif produit des forces d'amortissement variables.

26. Dispositif de contrôle de mouvement à commande magnétique selon la revendication 25, dans lequel le ou les premiers éléments mobiles ont la forme d'un sablier.

27. Dispositif de contrôle de mouvement à commande magnétique selon la revendication 25, dans lequel le ou les premiers éléments mobiles possèdent une dimension latérale maximale au niveau de l'une de leurs extrémités et une dimension latérale minimale au niveau de leur extrémité opposée.

28. Dispositif de contrôle de mouvement à commande magnétique selon la revendication 25, dans lequel le ou les premiers éléments mobiles comportent plusieurs ouvertures espacées le long du premier élément mobile.

29. Dispositif de contrôle de mouvement à commande magnétique selon la revendication 25, dans lequel le ou les premiers éléments mobiles comportent plusieurs ouvertures espacées le long du premier élément mobile.

30. Dispositif de contrôle de mouvement à commande magnétique selon la revendication 24, dans lequel le ou les premiers éléments mobiles possèdent une première dimension et une seconde dimension, les première et seconde dimensions étant sensiblement constantes.

31. Dispositif dé suspension de fil (1) destiné à suspendre un premier fil (T) à un fil de suspension (M), le dispositif comportant un dispositif de contrôle de mouvement (1) à commande magnétique selon l'une quelconque des revendications précédentes afin de contrôler le mouvement entre le premier fil et le fil de suspension, le premier élément mobile pouvant être relié à l'un du premier fil et du fil de suspension, et le deuxième élément mobile pouvant être relié à l'autre du premier fil et du fil de suspension.
